# EUROPEAN PATENT APPLICATION

(11) **EP 2 088 746 A1**
(43) Date of publication of application: **12.08.2009**
(21) Application number: 09151934.8
(22) Date of filing: 03.02.2009
(51) Int. Cl.: H04L 29/06, H04L 29/14

(54) **Transmitter apparatus, receiver apparatus, moving image and audio transmission evaluation method, and computer readable storage medium storing program thereof**

(30) Priority: 05.02.2008 JP 2008025696
(71) Applicant: Fujitsu Limited, Kawasaki-shi, Kanagawa 211-8588 (JP)
(72) Inventor: Togo, Tsutomu c/o FUJITSU LIMITED, Kanagawa 211-8588 (JP)
(74) Representative: HOFFMANN EITLE

(57) **Abstract**

There is provided a transmitter (10) that transmits a transmission packet including a group of various types of data and identification data associated with the group to a receiver apparatus (20). The transmitter apparatus includes a packet information storing means for storing a transmission packet table in which the identification data and packet information are related each other, and the packet information includes a type of the data and a position of the data in a sequence in the group, and a transmission means for transmitting data stored in the transmission packet table to the receiver apparatus.

## Description

### CROSS-REFERENCE TO RELATED APPLICATION

This application is based upon and claims the benefit of priority of the prior Japanese Patent Application No. 2008-025696, filed on February 5, 2008, the entire contents of which are incorporated herein by reference.

### BACKGROUND OF THE INVENTION

### 1. Field of the Invention

The present invention relates to a transmitter apparatus and a receiver apparatus for transmitting a transmission packet in which a plurality of types of data are packetized, and to a moving image and audio transmission evaluation method, and a computer readable storage medium storing program thereof.

### 2. Description of the Related Art

Since video and audio transmission service is currently performed over networks, the reproduction quality received by a receiver apparatus is problematic when the packets including video and audio data is lost in a network. In particular, in the case of a compressing method widely utilizing frame to frame difference of video, it is problem that an interruption will occur by a packet loss and continues until an arrival of an intra-frame compression image to be for subsequent frame.

As a overcoming such problem, Japanese Laid-open Patent Publication No. 2006-180236 discloses a method for retransmission technique. More specifically, if a packet loss takes place, a receiver side terminal requests a transmitter side terminal to re-transmit a packet, and the receiver side terminal receives the re-transmitted packet.

### SUMMARY

The object of the invention is that the receiver terminal is allowed to learn the effect of the missing packet on the quality of the reproduced image and audio and to evaluate the quality of the reproduced image and audio.

According to an aspect of the invention, an apparatus includes packet information storage means for storing on a transmission packet table a packet identifier and packet information mapped to the packet identifier, as transmission packet table information, the packet information representing a data type and a data position of data in each transmission packet, and transmission packet table information transmission means for transmitting to the receiver apparatus the transmission packet table information stored on the transmission packet table.

Since the disclosed apparatus transmits to a receiver terminal the transmission packet table that maps the packet identifier to the packet information representing the data type and the data position of the data in each transmission packet, the receiver terminal can learn the data type and the data position of the data of a missing packet. As a result, the receiver terminal can learn the effect of the missing packet on the quality of a reproduced image and audio. The receiver terminal can evaluate the quality of the reproduced image and audio.

### BRIEF DESCRIPTION OF THE DRAWINGS

Fig. 1 shows a schematic block diagram of a image and audio data transmission system according to a first embodiment;
Fig. 2 shows a diagram for explanation of packetizing moving image and audio data transmitted from a transmitter apparatus;
Fig. 3 shows a diagram of an example of a packet information table;
Fig. 4 shows a schematic diagram of process of producing a packet information table and of transmitting a transmission packets;
Fig. 5 shows a schematic diagram for explaining of degradation calculation of data in a packet received by the receiver apparatus;
Fig. 6 shows a flow chart of a process operation in the transmitter apparatus;
Fig. 7 shoes a flow chart of a process operation on the receiver apparatus;
Fig. 8 shows an example of a missing data effect table; and
Fig. 9 shows a schematic diagram for explaining of degradation calculation of data in a packet received by the receiver apparatus.

### DESCRIPTION OF THE PREFERRED EMBODIMENTS

Since the method in a prior art only recovers the packet loss by receiving the re-transmitted packet, and cannot learn a type and a position of a missing packet, and cannot evaluate quality of a reproduced image and audio at the receiver side terminal.

Embodiments of a transmitter apparatus, a receiver apparatus, a moving image and audio transmission quality evaluation method and a moving image and audio transmission quality evaluation program are described in detail with reference to the accompanying drawings.

### [Embodiment 1]

With reference to the following embodiments, a configuration and process of a video and audio data transmission system of an embodiment 1 are successively described.

### [Configuration of the video and audio data transmission system]

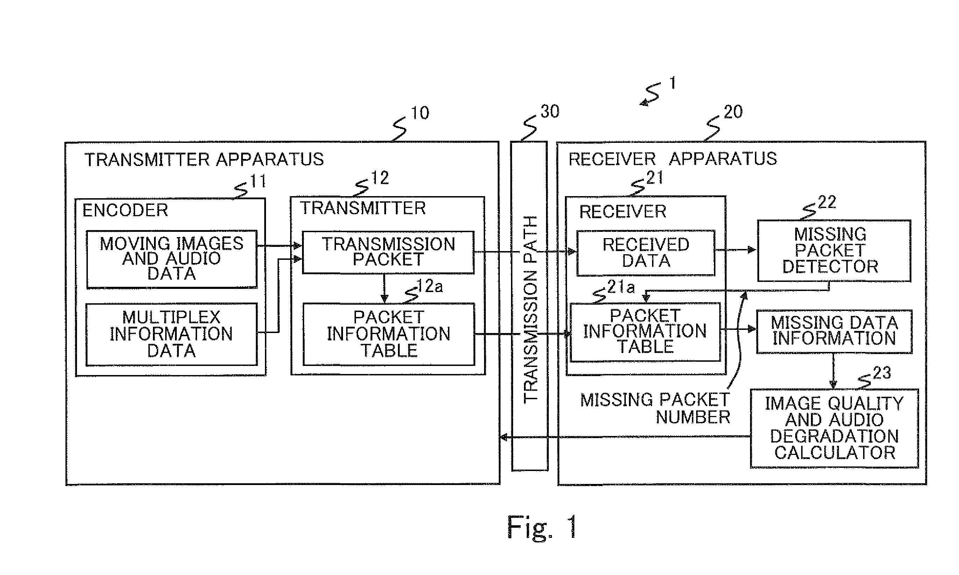

First, the configuration of the video and audio data transmission system 1 is described with reference to Fig. 1. Fig. 1 is a block diagram illustrating the configuration of the video and audio data transmission system 1 according to the first embodiment. As shown in Fig. 1, the video and audio data transmission system 1 includes a transmitter apparatus 10, a receiver apparatus 20, and a transmission path 30 by which the transmitter apparatus 10 and the receiver apparatus 20 are connected.

The transmitter apparatus 10 includes an encoder 11 and a transmitter 12. The receiver apparatus 20 includes a receiver 21, a missing packet detector 22, and an image quality and audio degradation calculator 23. An operation of each of these elements is described below. Furthermore, the transmitter 12 serves as "transmission packet table information transmission means", the receiver 21 as "receiving means", the missing packet detector 22 as "missing packet detecting means", and the image quality and audio degradation calculator 23 as "calculating means" , respectively.

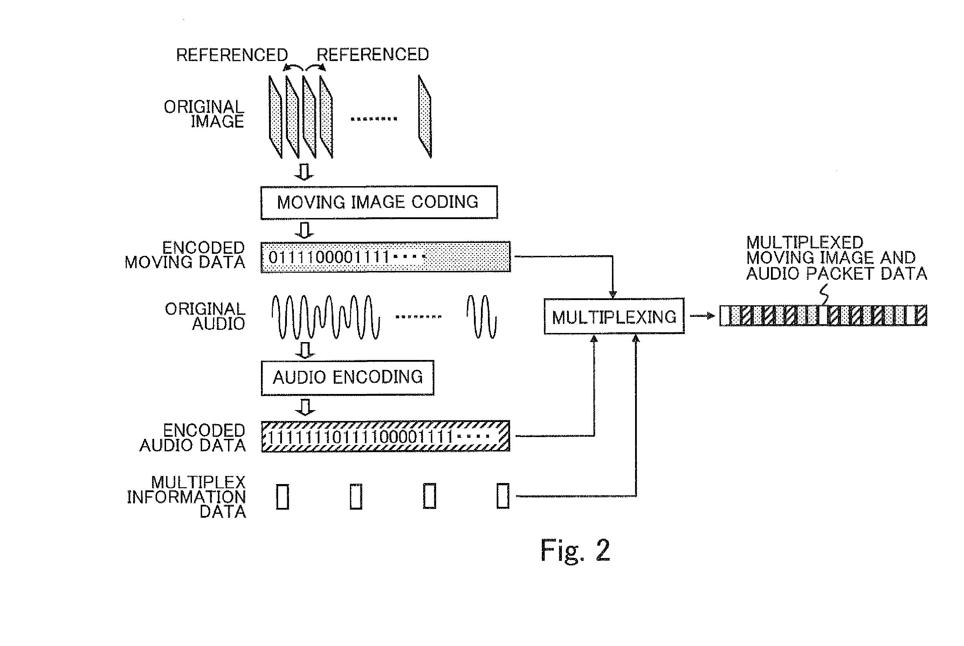

The encoder 11 packetizes moving image and audio data by encoding the moving image and audio data. More specifically, as illustrated in Fig. 2, the encoder 11 performs a moving image encoding process and an audio encoding process on an original image and an original audio, thereby obtaining encoded moving image data and encoded audio data. The encoder 11 produces multiplexed moving image and audio packet data by attaching multiplex information data which indicates data being multiplexed and supplies the produced multiplexed moving image and audio packet data to the transmitter 12.

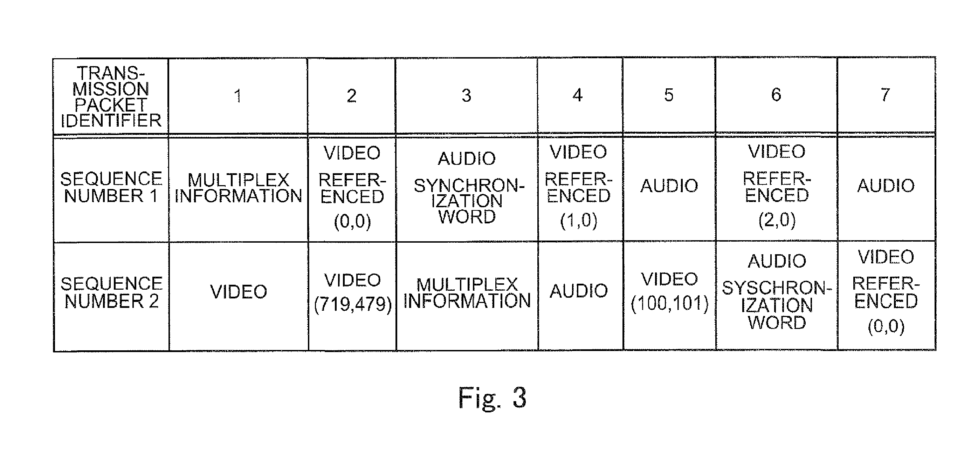

The transmitter 12 has a packet information table 12a in which a transmission packet identifier and packet information are stored. The packet identifier and the packet information are transmitted as transmission packet table information to the receiver apparatus 20. As illustrated in Fig. 3, the packet information table 12a stores a sequence number provided to the transmission packet and a packet identifier uniquely identifying the transmission packet, and the packet information mapped to the sequence number and packet identifier, the packet information representing a data type and a data position of data in each transmission packet.

The example shown in Fig. 3 is specifically described. The packet information table 12a stores the type of a packet in the transmission packets as to whether the packet is a "video" (moving image), an "audio," or "multiplex information." If the packet is a video, the packet information table 12a stores whether corresponding frame data is referenced by another frame data, and a position of the corresponding frame data in an original frame in a coordinates format. If the packet is an audio, the packet information table 12a stores whether a synchronization word (synchronization code) is present.

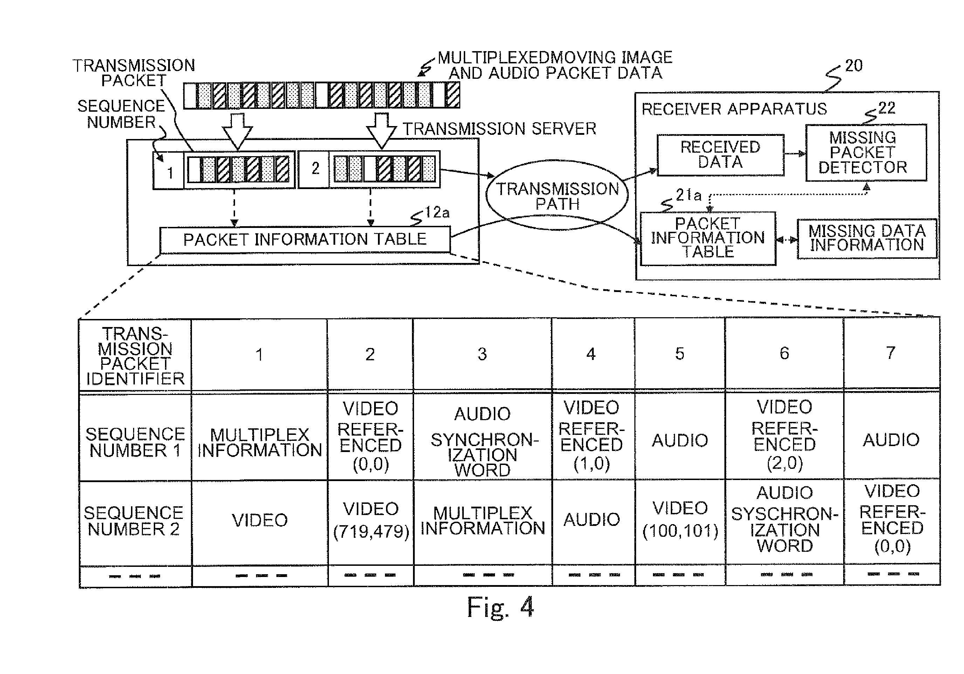

When the data is placed in a transmission packet, the transmitter 12 stores on the packet information table 12a the sequence number described in a header of a transmission packet and information of the moving image and audio data placed in the transmission packet. More specifically, as illustrated in Fig. 4, the transmitter 12 places the multiplexed moving image and audio data produced by the encoder 11 in the transmission packet, and places in each transmission packet a plurality of moving image packets, audio packets and multiplex information in a random fashion.

In this operation, the transmitter 12 stores in the packet information table 12a the type of a packet in each transmission packet as to whether the packet is a video, an audio or multiplex information. If a packet in the transmission packet is a video and the frame data of the video is referenced by another frame data, the transmitter 12 sets a flag indicating that the corresponding frame data is being referenced. The transmitter 12 stores on the packet information table 12a the position in the original frame in the coordinates format.

If a packet in the transmission packet is audio data and the synchronization word (synchronization code) is present in the audio packet in the transmission packet, the transmitter 12 sets a flag indicating that the synchronization word is present in corresponding audio information of the packet information table 12a and then describes the flag on the packet information table 12a.

Returning to the discussion of Fig. 1, the transmitter 12 transmits the transmission packet table information stormed on the packet information table 12a to the receiver apparatus 20 via the transmission path 30. After that, the transmitter 12 transmits the transmission packet to the receiver apparatus 20 via the transmission path 30.

The receiver 21 in the receiver apparatus 20 receives the transmission packet and the transmission packet table information from the transmitter apparatus 10. Upon receiving the transmission packet table information, the receiver 21 causes the transmission packet table information to be stored on a packet information table 21a. Upon receiving the transmission packet, the receiver 21 supplies the transmission packet to the missing packet detector 22.

The missing packet detector 22 detects a missing packet from in received transmission packet, and acquires the data type of the missing packet from the packet information table 21a. More specifically, the missing packet detector 22 determines based on the sequence number described in the header of the transmission packet whether or not each of successively received packets is missing.

If any missing packet is confirmed, the missing packet detector 22 acquires the data type as missing data information using the packet information table 21a, where the data type corresponding to the sequence number of the missing packet and the transmission packet identifier (the sequence number and the transmission packet identifier is referred to as "missing packet number" in Fig. 1). The missing packet detector 22 then notifies the image quality and audio degradation calculator 23 of the missing data information.

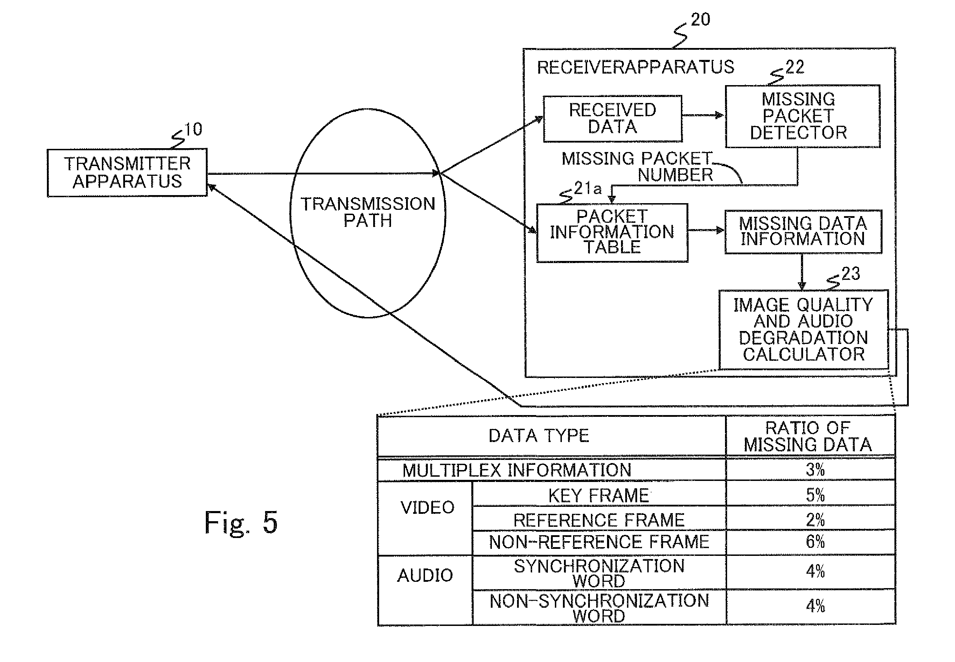

The image quality and audio degradation calculator 23 calculates a ratio of the number of units of missing data to the number of units of transmitted data on a per acquired data type basis, and transmits the calculation results to the transmitter apparatus 10. More specifically, as illustrated in Fig. 5, the image quality and audio degradation calculator 23 calculates a missing ratio of each of the data types, such as the multiplex information, the video (key frame, reference frame, and non-reference frame), the audio (synchronization word, and non-synchronization word). The image quality and audio degradation calculator 23 transmits the calculation results to the transmitter apparatus 10.

### [Process of the transmitter apparatus]

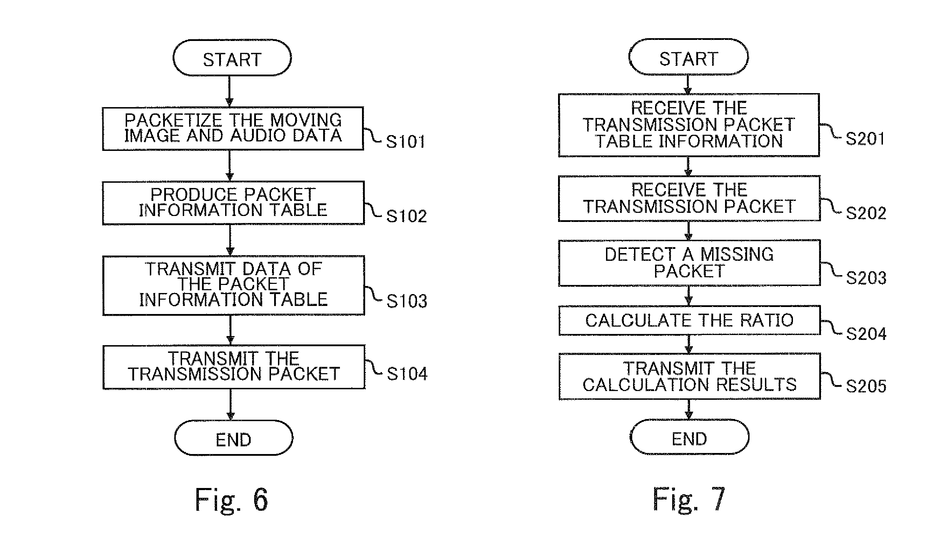

A process of the transmitter apparatus 10 according to the first embodiment is described next with reference to Fig. 6. Fig. 6 is a flowchart illustrating process operations of the transmitter apparatus 10 according to the first embodiment.

As illustrated in the same figure, the transmitter apparatus 10 packetizes the moving image and audio data by encoding the moving image and audio data (step S101). When the data is placed in the transmission packet, the transmitter apparatus 10 stores, on the packet information table 12a, the sequence number described at the header of the transmission packet and the information of the moving image and audio data. Thus the packet information table is created (step S102).

The transmitter apparatus 10 then transmits to the receiver apparatus 20 the transmission packet table information stored on the packet information table 12a via the transmission path 30 (step S103). After that, the transmitter 12 transmits the transmission packet to the receiver apparatus 20 via the transmission path 30 (step S104).

### [Process of the receiver apparatus]

A process of the receiver apparatus 20 according to the first embodiment is described next with reference to Fig. 7. Fig. 7 is a flowchart illustrating process operations of the receiver apparatus 20 according to the first embodiment.

As illustrated in Fig. 7, the receiver apparatus 20 receives the transmission packet table information transmitted from the transmitter apparatus 10 (step S201), and then receives the transmission packet transmitted from the transmitter apparatus 10 (step S202).

The receiver apparatus 20 then detects a missing packet using the sequence number at the header of the transmission packet (step S203). The receiver apparatus 20 calculates a ratio of the number of units of missing data to the number of units of transmitted data for each data type of the missing packet (step S204), and transmits the calculation results to the transmitter apparatus 10 (step S205).

As described above, the transmitter apparatus 10 transmits to the receiver apparatus 20 the transmission packet table mapping the sequence number and transmission packet identifier to the packet information representing the data type and data position of the data in each transmission packet. The receiver apparatus 20 can thus learn the data type and data position of the missing packet, and the receiver apparatus 20 can learn the effect of the missing packet on the quality of reproduced image and audio, and evaluate the quality of the reproduced image and audio.

In accordance with the first embodiment, if the type of the data in the transmission packet is moving image data, the transmitter apparatus 10 stores, on the packet information table 12a, the packet information as to whether the moving image data is referenced in encoding of another moving image data. Since the transmitter apparatus 10 transmits the packet information table to the receiver apparatus 20, the receiver apparatus 20 can easily learn whether the moving image referenced by another frame is present in the missing packet.

According to the first embodiment, if the type of the data in the transmission packet is moving image data, the transmitter apparatus 10 stores, on the packet information table 12a, the position information representing the position of the moving image data in an original image frame as the packet information. Since the transmitter apparatus 10 transmits the packet information table to the receiver apparatus 20, the receiver apparatus 20 can easily learn the position of the missing moving image data in the original image frame.

According to the first embodiment, if the type of the data in the transmission packet is audio data, the transmitter apparatus 10 stores, on the packet information table 12a, the synchronization code of the audio data as the packet information. Since the transmitter apparatus 10 transmits the packet information table to the receiver apparatus 20, the receiver apparatus 20 can easily learn whether the synchronization word of an audio is present in the packet.

According to the first embodiment, the receiver apparatus 20 receives from the transmitter apparatus 10 the transmission packet and the transmission packet table information. The receiver apparatus then detects a missing packet from among the received transmission packets, acquires the data type of the missing packet from the packet information table 21a, and calculates the ratio of the number of units of missing data to the number of units of transmitted data on a per acquired data type. The degradation of reproduction quality due to packet loss on a network is easily obtained without measuring the quality of each receiver apparatus with a dedicated apparatus or the like.

According to the first embodiment, the receiver apparatus 20 transmits to the transmitter apparatus 10 the ratio of the number of units of missing data to the number of units of transmitted data. Information related to reproduction quality of each receiver apparatus, therefore, is accumulated in the transmitter apparatus. The transmitter apparatus can simulate image and audio quality at the receiver apparatus, and can learn degradation status and recovery status in quality on a real-time basis.

### [Embodiment 2]

The present invention may be implemented in an embodiment different from the first embodiment. Another embodiment falling within the present invention is described below as a second embodiment.

### (1) Degradation index

In accordance with the first embodiment, the ratio of the number of units of missing data to the number of units of transmitted data is calculated on a per missing packet data type basis. The present invention is not limited to this method. A degradation index indicating the effect of the missing packet on the reproduction quality may be calculated.

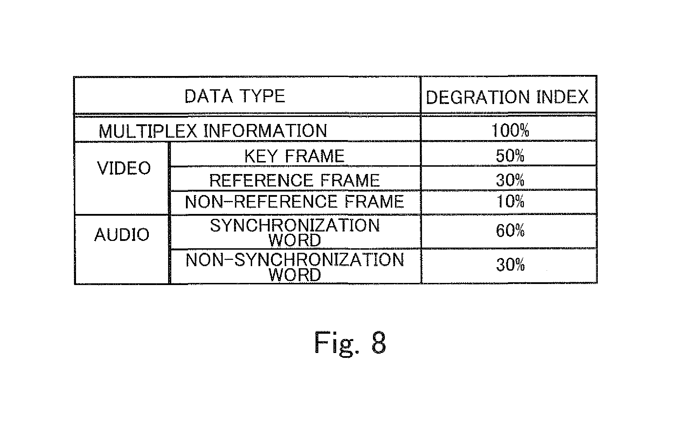

More specifically, as illustrated in Fig. 8, the receiver apparatus stores a missing data effect table. The receiver apparatus stores a data type and a degradation index mapped to the data type, the degradation index for a missing packet of the data type. More specifically, the larger the degradation index, the more effect the degradation index has on the reproduction quality.

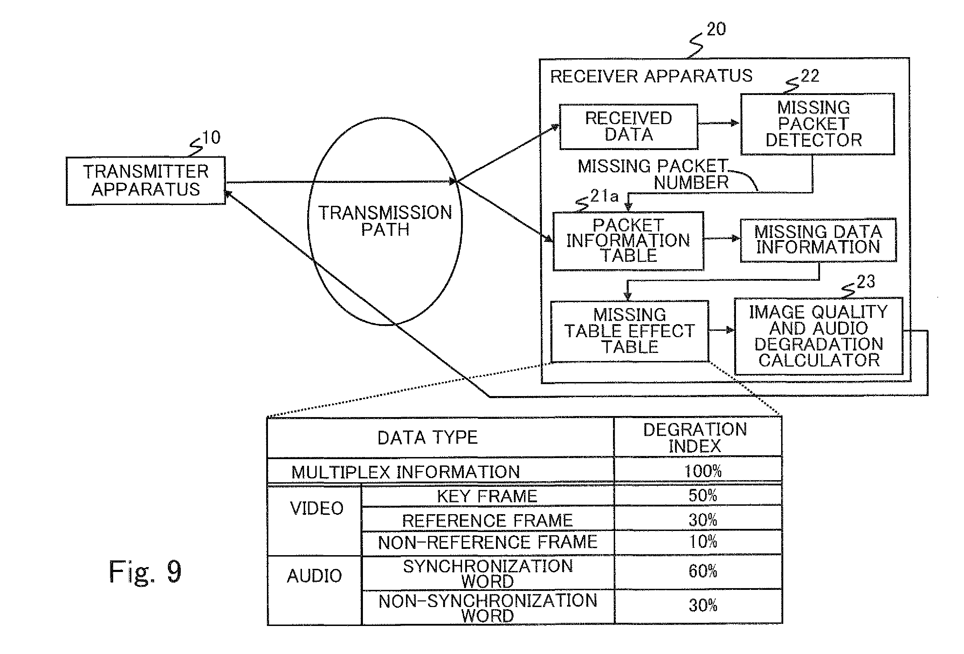

If a missing packet is confirmed, the missing packet detector 22 in the receiver apparatus 20 acquires, as missing data information, a data type corresponding to the sequence number of the missing packet and a transmission packet identifier ("missing packet number" in Fig. 9) from the transmission packet table as illustrated in Fig. 9. The image quality and audio degradation calculator reads the degradation index corresponding to the data type from the missing data effect table and calculates the degradation index.

### (2) System configuration, etc.

Elements in each apparatus represent functional concepts and do not necessarily mean that the apparatus is physically configured as illustrated. More specifically, the specific distributed or integrated configuration of each apparatus is not limited to the one illustrated, and part or whole of the apparatus may be distributed or integrated functionally or physically by any unit depending on various workloads and operational status. For example, the encoder 11 and the transmitter 12 may be divided as separate apparatuses. Any part or whole of a process function performed by each apparatus may be performed by a CPU or a program analyzed and executed by the CPU, or may be performed by wired logic hardware.

Part or whole of each process discussed as the one to be automatically executed in connection with each embodiment may be manually performed. On the contrary, part or whole of each process discussed as the one to be manually executed in connection with each embodiment may be automatically performed in a known method. The process flow, the control process, specific names, and information containing a variety of data and parameters discussed in the specification and illustrated in the drawings may be modified unless otherwise specifically noted.

### (3) Program

The moving image and audio transmission evaluation method discussed with reference to the embodiments may be performed by a computer, such as a personal computer or a workstation station, which executes a prepared program. Such a program may be distributed via a network such as the Internet. The program may be recorded onto a computer-readable recording medium such as a hard disk, a flexible disk (FD), a CD-ROM, an MO, or a DVD, and then executed by the computer that reads the program from the recording medium.

## Claims

1. A transmitter apparatus for transferring to a receiver apparatus a plurality of transmission packets in series, each of the transmission packets being of one of a plurality of types of data and including identification data identifying the one of the types, comprising:
a packet information generating means for generating packet information for each of the transmission packets to be transferred in reference to the identification data in each of the transmission packets, the packet information being indicative of position of the data in each of the transmission packets; and
a transmission means for transmitting the transmission packets together with the packet information to the receiver apparatus.

2. The transmitter apparatus according to claim 1, wherein the packet information includes data by which moving image data included in the transmission packets is referred to encoding another moving image.

3. The transmitter apparatus according to claim 1, wherein the packet information includes positional data of a moving image in the transmission packets, the positional data corresponding to coordinate data in a frame of an original picture.

4. The transmitter apparatus according to claim 1, wherein the packet information includes data corresponding to a synchronization code of audio data included in the transmission packets.

5. A receiver apparatus operable to receive a transmission packet from a transmitter apparatus, the transmission packet including a group of various types of data, identification data associated with the group, and a transmission packet table in which the identification data and packet information are related each other, the packet information including a type of the data and a position of the data in a sequence in the group, the receiver apparatus comprising:
a receiving means for receiving the transmission packet and data corresponding to the transmission packet table;
a missing packet detector for detecting a missing packet out of a plurality of the transmission packets and the type of data in the missing packet by use of the data corresponding to the transmission packet table; and
a calculator for calculating a ratio of the number of pieces of data in the missing packets to the number of pieces of data transmitted from the transmitter apparatus for each of types of the data.

6. The receiver apparatus according to claim 5, further comprising a transmitting means for transmitting the ratio to the transmitter apparatus.

7. A method for evaluating a transmission quality for a transmission packet transmitted from a transmitter apparatus to a receiver apparatus, the transmission packet including various types of data, comprising:
storing in the transmitter apparatus a transmission packet table in which a identification data and packet information are related each other, the identification data for identifying the transmission packet, the packet information including a type of the data and a position of the data in a sequence in the transmission packet; and
transmitting from the transmitter apparatus to the receiver apparatus the identification data and the packet information.

8. The method for evaluating a transmission quality according to claim 7, further comprising:
detecting a missing packet out of a plurality of the transmission packets and the type of data in the missing packet by use of the data corresponding to the transmission packet table; and
calculating a ratio of the number of pieces of data in the missing packets to the number of pieces of data transmitted from the transmitter apparatus for each of types of the data.
